# EUROPEAN PATENT APPLICATION

(11) **EP 4 640 508 A1**
(43) Date of publication of application: **29.10.2025**
(21) Application number: 23917103.6
(22) Date of filing: 23.10.2023
(51) Int. Cl.: B60W 30/06

(54) **PARKING METHOD AND APPARATUS, AND INTELLIGENT DRIVING DEVICE**

(30) Priority: 18.01.2023 CN 202310119000
(71) Applicant: Shenzhen Yinwang Intelligent Technologies Co., Ltd., Shenzhen, Guangdong 518110 (CN)
(72) Inventor: LI, Wei, Shenzhen, Guangdong 518129 (CN); SHEN, Yujie, Shenzhen, Guangdong 518129 (CN)
(74) Representative: Pfenning, Meinig & Partner mbB
(86) International application number: PCT/CN2023/125841
(87) International publication number: WO 2024/152635

(57) **Abstract**

A parking method and apparatus, and an intelligent driving device are provided. The method includes: detecting a reference object within a preset range of the intelligent driving device when a remote parking instruction sent by a mobile terminal is received; determining a height difference between a first plane on which the reference object is located and a second plane on which the intelligent driving device is located; and disabling a remote parking function when the height difference is greater than or equal to a first preset threshold. The control method may be applied to the intelligent driving device, for example, a new energy vehicle or an electric vehicle. When a user enables remote parking, if the intelligent driving device is at a high position and has a risk of falling, remote parking is terminated, to prevent the intelligent driving device from falling from the high position. This helps improve safety of the intelligent driving device and personal safety of a pedestrian around the intelligent driving device. If the intelligent driving device is in a sunken parking space and has a risk of collision, remote parking is terminated, to prevent the intelligent driving device from colliding with a wall around the sunken parking space. This helps improve safety of the intelligent driving device.

## Description

This application claims priority to Chinese Patent Application No. 202310119000.2, filed with the China National Intellectual Property Administration on January 18, 2023 and entitled "PARKING METHOD AND APPARATUS, AND INTELLIGENT DRIVING DEVICE", which is incorporated herein by reference in its entirety.

### TECHNICAL FIELD

This application relates to the field of intelligent driving, and more specifically, to a parking method and apparatus, and an intelligent driving device.

### BACKGROUND

Auto parking (auto parking, AP) means that a vehicle is automatically parked in a parking space, to be specific, an autonomous driving system can help a user park the vehicle in the parking space semi-automatically or automatically. Auto parking may include auto parking assist (auto parking assist, APA), remote parking assist (remote parking assist, RPA), auto valet parking (auto valet parking, AVP), and the like.

A current auto parking system generally supports parking the vehicle in or out of a flat parking space. After the vehicle is parked in a mechanical parking space and the mechanical parking space rises to a high position, if the user enables a remote parking function, the vehicle may fall from the high position. Consequently, a property loss of the user is caused, and even personal safety of the user is seriously threatened.

In view of this, a parking solution that can improve vehicle safety urgently needs to be developed.

### SUMMARY

This application provides a parking method and apparatus, and an intelligent driving device, to improve safety in a parking process of a vehicle.

According to a first aspect, a parking method is provided. The method may be performed by an intelligent driving device, or may be performed by a computing platform of the intelligent driving device, or may be performed by a chip or a circuit used in the intelligent driving device.

The intelligent driving device in this application may include a road transportation means, a water transportation means, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent driving device may be a transportation means like an airplane or a ship.

The method includes: detecting a reference object within a preset range of the intelligent driving device when a remote parking instruction sent by a mobile terminal is received; determining a height difference between a first plane on which the reference object is located and a second plane on which the intelligent driving device is located; and disabling a remote parking function when the height difference is greater than or equal to a first preset threshold.

**In** the foregoing technical solution, when a user of the intelligent driving device enables remote parking, the intelligent driving device first determines whether the intelligent driving device is at a high position or in a sunken parking space. When the intelligent driving device is at the high position and has a risk of falling, the intelligent driving device may control a remote parking procedure to be terminated, to prevent the intelligent driving device from falling from the high position. This helps improve safety of the intelligent driving device and personal safety of a pedestrian around the intelligent driving device. When the intelligent driving device is located in the sunken parking space and has a risk of collision, the remote parking procedure may be controlled to be terminated, to prevent the intelligent driving device from colliding with a wall around the sunken parking space. This helps improve safety of the intelligent driving device.

For example, the preset range may be a range that is 3 meters away from an outer contour of the intelligent driving device, or may be another range.

For example, the first preset threshold may be 20 centimeters, 30 centimeters, or another value.

For example, the reference object may include but is not limited to the pedestrian around the intelligent driving device, an object with a fixed height, and an object whose height is specified in a related standard. The pedestrian around the intelligent driving device may include the user of the intelligent driving device.

It should be understood that after the remote parking function is disabled, the user cannot control, by using the mobile terminal, the intelligent driving device to move.

It should be noted that, in this application, the height difference between the first plane and the second plane may be a height difference between an extension surface of the first plane and an extension surface of the second plane. When both the intelligent driving device and the user are on a same ramp, a height difference between the user and the intelligent driving device may be greater than or equal to the first preset threshold. However, in this case, an extension surface of the plane on which the intelligent driving device is located and an extension surface of a plane on which the user is located are a same plane, that is, a height difference between the plane on which the intelligent driving device is located and the plane on which the user is located is 0. Therefore, the reader needs to pay attention to a difference between the height difference between the user and the intelligent driving device and the height difference between the plane on which the intelligent driving device is located and the plane on which the user is located.

With reference to the first aspect, in some implementations of the first aspect, the reference object includes the user of the intelligent driving device, and before the determining a height difference between a first plane on which the reference object is located and a second plane on which the intelligent driving device is located, the method further includes: controlling the mobile terminal to notify the user to enter the preset range.

**In** some possible implementations, the mobile terminal is controlled to notify the user to enter a preset area of the intelligent driving device, where the preset range includes the preset area.

**In** some possible implementations, when no reference object within the preset range of the intelligent driving device is detected, the mobile terminal is controlled to notify the user to enter the preset area of the intelligent driving device. For example, if no reference object within the preset range of the intelligent driving device is detected within first preset duration after reception of the remote parking instruction sent by the mobile terminal, the mobile terminal is controlled to notify the user to enter the preset area of the intelligent driving device. For example, the first preset duration may be 3 seconds, or may be other duration.

For example, the preset area may include a fixed area of the head and/or a fixed area of the tail of the intelligent driving device, or the preset area may include a sensing area of a sensor of the intelligent driving device.

In the foregoing technical solution, the reference object is added to the intelligent driving device by notifying the user to enter the preset area. This improves reliability of a remote parking system.

With reference to the first aspect, in some implementations of the first aspect, the preset range includes a preset area of the vehicle head of the intelligent driving device, and the controlling the mobile terminal to notify the user to enter the preset range includes: controlling the mobile terminal to notify the user to enter the preset area of the vehicle head.

In the foregoing technical solution, the head of the vehicle usually faces an opening (or referred to as an entrance) direction of a mechanical parking space. Therefore, the user is notified to enter the preset area of the head of the vehicle, so that the user enters the notified preset range. This helps improve user experience.

With reference to the first aspect, in some implementations of the first aspect, the determining a height difference between a first plane on which the reference object is located and a second plane on which the intelligent driving device is located includes: when the user is not detected within the preset range within preset duration starting from controlling the mobile terminal to notify the user to enter the preset range, determining that the height difference is greater than or equal to the first preset threshold.

For example, the preset duration may be 10 seconds, 5 seconds, or another value.

In some possible implementations, if no reference object within the preset range of the intelligent driving device is detected within the first preset duration after reception of the remote parking instruction sent by the mobile terminal, the mobile terminal is controlled to notify the user to enter the preset area of the intelligent driving device. If the user is not detected within the preset duration that is after the mobile terminal is controlled to notify the user to enter the preset area, it is determined that the height difference between the first plane on which the user is located and the second plane is greater than or equal to the first preset threshold, and the remote parking function is disabled.

In the foregoing technical solution, some intelligent driving devices do not have a capability of detecting a negative obstacle. In this case, when the intelligent driving device is at a high position, and a highest position of the user on the first plane is lower than the plane on which the intelligent driving device is located, the intelligent driving device cannot detect the user. Alternatively, the intelligent driving device is located in a sunken parking space, and the sensor of the intelligent driving device may be blocked by an obstacle like a wall around the sunken parking space. As a result, the user on the first plane cannot be recognized. Therefore, when the user is not detected within the preset duration, it may be considered that the intelligent driving device is at the high position or in the sunken parking space, and is not suitable for remote parking. **In** this case, the remote parking function is disabled. This helps improve reliability of the remote parking system and intelligence of the intelligent driving device.

With reference to the first aspect, in some implementations of the first aspect, the reference object includes the pedestrian around the intelligent driving device. The determining a height difference between a first plane on which the reference object is located and a second plane on which the intelligent driving device is located includes: determining, based on a human body feature of the pedestrian, the height difference between the first plane on which the pedestrian is located and the second plane.

For example, the human body feature may include a position of a human body key point in three-dimensional space, or may further include features such as a height and an age.

In an implementation, the height difference between the first plane and the second plane is determined based on the position of the human body key point in the three-dimensional space and a position of the second plane in the three-dimensional space.

With reference to the first aspect, in some implementations of the first aspect, the determining a height difference between a first plane on which the reference object is located and a second plane on which the intelligent driving device is located includes: determining the height difference based on a relationship between a height of the reference object and a preset height threshold.

For example, when the height of the reference object is less than or equal to the preset height threshold, it is determined that the first plane on which the reference object is located is lower than the second plane on which the intelligent driving device is located, and that the height difference between the first plane and the second plane is greater than or equal to the first preset threshold.

In an example, if the intelligent driving device stores height information of the user of the intelligent driving device, the preset height threshold may be a height (for example, 165 centimeters) of the user, or a height (for example, 155 centimeters) obtained by subtracting a corresponding error from a height of the user. The corresponding error may be 10 centimeters, or may be another value. Further, when the height of the user is less than or equal to the preset height threshold, it may be considered that the first plane on which the user is located is lower than the second plane, and the height difference between the first plane and the second plane is greater than or equal to the first preset threshold.

With reference to the first aspect, in some implementations of the first aspect, before the detecting a reference object around the intelligent driving device, the method further includes: determining that the intelligent driving device is located in the mechanical parking space.

In the foregoing technical solution, when it is detected that the intelligent driving device is located in the mechanical parking space, a height difference determining procedure is enabled, so that when the intelligent driving device is parked in a non-mechanical parking space, the height difference determining procedure may not be performed. This helps reduce computing power required for controlling remote parking.

With reference to the first aspect, in some implementations of the first aspect, the method further includes: controlling the mobile terminal to notify the user of the intelligent driving device that the remote parking function is disabled.

For example, the user may be notified to perform remote parking after the intelligent driving device is lowered to the ground or is raised to the ground.

**In** the foregoing technical solution, the user may be notified that the intelligent driving device is not allowed to perform remote parking in a current status, so that the user takes measures in a timely manner. This improves user experience.

With reference to the first aspect, in some implementations of the first aspect, the method further includes: when the height difference is less than a second preset threshold, controlling, based on the remote parking instruction, the intelligent driving device to park, where the second preset threshold is less than or equal to the first preset threshold.

For example, the second preset threshold may be 10 centimeters, 20 centimeters, or another value.

**In** the foregoing technical solution, when the height difference between the first plane and the second plane is less than a specific height, it is considered that the height difference between the first plane and the second plane does not affect parking in or parking out of the intelligent driving device. **In** this case, remote parking may be performed by using the mobile terminal.

With reference to the first aspect, in some implementations of the first aspect, the disabling a remote parking function includes: disabling the remote parking function when the height difference is greater than or equal to the first preset threshold and the first plane is lower than the second plane.

According to a second aspect, a parking method is provided. The method includes: detecting a reference object around an intelligent driving device when a remote parking instruction sent by a mobile terminal is received; and disabling a remote parking function when the reference object is not detected within preset duration; or disabling the remote parking function when it is determined that a height at which the reference object is located is less than or equal to a preset height threshold.

With reference to the second aspect, in some implementations of the second aspect, the reference object includes a user of the intelligent driving device, and before the disabling a remote parking function when the reference object is not detected within preset duration, the method further includes: controlling the mobile terminal to notify the user to enter a preset area of the intelligent driving device. The disabling a remote parking function when the reference object is not detected within preset duration includes: disabling the remote parking function when the user is not detected in the preset area within the preset duration.

With reference to the second aspect, in some implementations of the second aspect, the reference object includes a pedestrian around the intelligent driving device, and the method further includes: determining, based on a human body feature of the pedestrian, that a height at which the pedestrian is located is less than or equal to the preset height threshold.

With reference to the second aspect, in some implementations of the second aspect, before the detecting a reference object around an intelligent driving device, the method further includes: determining that the intelligent driving device is located in a mechanical parking space.

With reference to the second aspect, in some implementations of the second aspect, the method further includes: controlling the mobile terminal to notify the user of the intelligent driving device that the remote parking function is disabled.

With reference to the second aspect, in some implementations of the second aspect, the method further includes: when the reference object is detected within the preset duration, and the height at which the reference object is located is greater than the preset height threshold, controlling, based on the remote parking instruction, the intelligent driving device to park.

With reference to the second aspect, in some implementations of the second aspect, before the controlling, based on the remote parking instruction, the intelligent driving device to park, the method further includes: controlling the mobile terminal to notify the user of the intelligent driving device to perform remote parking.

According to a third aspect, a parking apparatus is provided. The apparatus includes a transceiver unit, a detection unit, a determining unit, and a processing unit. The detection unit is configured to detect a reference object within a preset range of an intelligent driving device when the transceiver unit receives a remote parking instruction sent by a mobile terminal. The determining unit is configured to determine a height difference between a first plane on which the reference object is located and a second plane on which the intelligent driving device is located. The processing unit is configured to disable a remote parking function when the height difference is greater than or equal to a first preset threshold.

With reference to the third aspect, in some implementations of the third aspect, the reference object includes a user of the intelligent driving device, and the processing unit is further configured to: before the determining unit determines the height difference between the first plane on which the reference object is located and the second plane on which the intelligent driving device is located, control the mobile terminal to notify the user to enter the preset range.

With reference to the third aspect, in some implementations of the third aspect, the preset range includes a preset area of a vehicle head of the intelligent driving device, and the processing unit is configured to control the mobile terminal to notify the user to enter the preset area of the vehicle head.

With reference to the third aspect, in some implementations of the third aspect, the determining unit is configured to: when the user is not detected within the preset range within preset duration starting from controlling the mobile terminal to notify the user to enter the preset range, determine that the height difference is greater than or equal to the first preset threshold.

With reference to the third aspect, in some implementations of the third aspect, the reference object includes a pedestrian around the intelligent driving device, and the determining unit is configured to determine, based on a human body feature of the pedestrian, the height difference between the first plane on which the pedestrian is located and the second plane.

With reference to the third aspect, in some implementations of the third aspect, the determining unit is configured to determine the height difference based on a relationship between a height of the reference object and a preset height threshold.

With reference to the third aspect, in some implementations of the third aspect, the processing unit is further configured to: before the detection unit detects the reference object around the intelligent driving device, determine that the intelligent driving device is located in a mechanical parking space.

With reference to the third aspect, in some implementations of the third aspect, the processing unit is further configured to control the mobile terminal to notify the user of the intelligent driving device that the remote parking function is disabled.

With reference to the third aspect, in some implementations of the third aspect, the processing unit is further configured to: when the height difference is less than a second preset threshold, control, based on the remote parking instruction, the intelligent driving device to park, where the second preset threshold is less than or equal to the first preset threshold.

With reference to the third aspect, in some implementations of the third aspect, the processing unit is configured to disable the remote parking function when the height difference is greater than or equal to the first preset threshold and the first plane is lower than the second plane.

According to a fourth aspect, a parking apparatus is provided. The apparatus includes a transceiver unit, a detection unit, a determining unit, and a processing unit. The detection unit is configured to detect a reference object around an intelligent driving device when the transceiver unit receives a remote parking instruction sent by a mobile terminal. The processing unit is configured to: disable a remote parking function when the detection unit does not detect the reference object within preset duration; or disable the remote parking function when it is determined that a height at which the reference object is located is less than or equal to a preset height threshold.

With reference to the fourth aspect, in some implementations of the fourth aspect, the apparatus may further perform the method in another possible implementation of the second aspect. Details are not described herein again.

According to a fifth aspect, a parking apparatus is provided. The apparatus includes: a memory, configured to store a computer program; and a processor, configured to execute the computer program stored in the memory, so that the apparatus performs the method according to any one of the possible implementations of the first aspect or the second aspect.

According to a sixth aspect, an intelligent driving device is provided. The intelligent driving device includes the apparatus according to any one of the possible implementations of the third aspect to the fifth aspect.

With reference to the sixth aspect, in some implementations of the sixth aspect, the intelligent driving device is a vehicle.

According to a seventh aspect, a computer program product is provided. The computer program product includes computer program code, and when the computer program code is run on a computer, the computer is enabled to perform the method according to any one of the possible implementations of the first aspect or the second aspect.

It should be noted that all or some of the computer program code may be stored in a first storage medium. The first storage medium may be encapsulated together with a processor, or may be encapsulated separately from a processor.

According to an eighth aspect, a computer-readable medium is provided. The computer-readable medium stores instructions. When the instructions are executed by a processor, the processor is enabled to implement the method according to any one of the possible implementations of the first aspect or the second aspect.

According to a ninth aspect, a chip is provided. The chip includes a circuit, and the circuit is configured to perform the method according to any one of the possible implementations of the first aspect or the second aspect.

### BRIEF DESCRIPTION OF DRAWINGS

FIG. 1 is a functional block diagram of an intelligent driving device according to an embodiment of this application;
FIG. 2 is a diagram of a mechanical parking space;
FIG. 3 is a diagram of a system architecture required for implementing a parking method according to an embodiment of this application;
FIG. 4 is a schematic flowchart of a parking method according to an embodiment of this application;
FIG. 5 is a diagram of a preset area according to an embodiment of this application;
FIG. 6 is another schematic flowchart of a parking method according to an embodiment of this application;
FIG. 7(a) to FIG. 7(i) are a diagram of an application scenario of a parking method according to an embodiment of this application;
FIG. 8 is a block diagram of a parking apparatus according to an embodiment of this application; and
FIG. 9 is a block diagram of a parking apparatus according to an embodiment of this application.

### DESCRIPTION OF EMBODIMENTS

In descriptions of embodiments of this application, unless otherwise specified, "/" indicates "or". For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, at least one means one or more, and a plurality of means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

Prefix words "first", "second", and the like in embodiments of this application are merely intended to distinguish between different described objects, and impose no limitation on locations, sequences, priorities, quantities, content, or the like of the described objects. Use of prefixes such as ordinal numbers used to distinguish the described objects in embodiments of this application does not constitute a limitation on the described objects. For description of the described objects, refer to the context description in claims or embodiments, and the use of such prefixes should not constitute a redundant limitation.

To facilitate understanding of the solutions in embodiments of this application, concepts in this application are first described.
1. Negative obstacle: A negative obstacle is an obstacle whose highest position is lower than a plane on which an intelligent driving device is located. For example, if the plane on which the intelligent driving device is located is a road surface, the negative obstacle may be a ditch, a manhole hole, a ground collapse, or the like.
2. High obstacle: A high obstacle is an obstacle whose highest position is higher than the plane on which the intelligent driving device is located.

The following describes the technical solutions of embodiments in this application with reference to accompanying drawings.

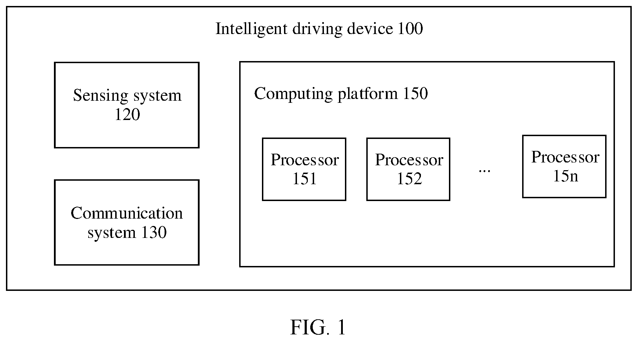

FIG. 1 is a functional block diagram of an intelligent driving device 100 according to an embodiment of this application. The intelligent driving device 100 may include a sensing system 120, a communication system 130, and a computing platform 150. The sensing system 120 may include one or more sensors that sense ambient environment information of the intelligent driving device 100. For example, the sensing system 120 may include a positioning system, and the positioning system may be a global positioning system (global positioning system, GPS), or may be a BeiDou system or another positioning system, or an inertial measurement unit (inertial measurement unit, IMU). For another example, the sensing system 120 may further include one or more of a lidar, a millimeter-wave radar, an ultrasonic radar, and a camera apparatus.

The intelligent driving device 100 interacts with a cloud server, another intelligent driving device, a mobile terminal, and the like by using the communication system 130. The communication system 130 may include a wireless communication system.

Some or all functions of the intelligent driving device 100 may be controlled by the computing platform 150. The computing platform 150 may include one or more processors, for example, processors 151 to 15n (where n is a positive integer). The processor is a circuit having an instruction processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement hardware circuit configuration may be understood as a process in which the processor loads an instruction to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory to execute the instructions, to implement corresponding functions.

The intelligent driving device 100 may include an advanced driving assistance system (advanced driving assistance system, ADAS). The ADAS obtains information around the intelligent driving device by using a plurality of sensors (including but not limited to a lidar, a millimeter-wave radar, a camera apparatus, an ultrasonic sensor, a global positioning system, and an inertial measurement unit) on the intelligent driving device, and analyzes and processes the obtained information, to implement functions such as obstacle sensing, target recognition, intelligent driving device positioning, path planning, and user monitoring/reminding, so as to improve driving safety, automation, and comfort of the intelligent driving device.

In terms of logical functions, the ADAS system generally includes three main functional modules: a sensing module, a decision module, and an execution module. The sensing module senses an ambient environment of a vehicle body by using a sensor, and inputs corresponding real-time data to a decision layer processing center. The sensing module mainly includes a vehicle-mounted camera, an ultrasonic radar, a millimeter-wave radar, a lidar, and the like. Based on information obtained by the sensing module, the decision module makes a corresponding decision by using a computing apparatus and an algorithm. After receiving a decision instruction from the decision module, the execution module takes a corresponding action, for example, driving, performing lane change, steering, braking, or warning.

At different autonomous driving levels (L0 to L5), the ADAS may implement different levels of autonomous driving assistance based on information obtained by using an artificial intelligence algorithm and a plurality of sensors. The autonomous driving levels (L0 to L5) are based on a grading standard of the society of automotive engineers (society of automotive engineers, SAE). The level L0 indicates no automation, the level L1 indicates driving assistance, the level L2 indicates partial automation, the level L3 indicates conditional automation, the level L4 indicates high automation, and the level L5 indicates full automation. Tasks that are of monitoring and responding to road conditions and that are at the levels L1 to L3 are jointly completed by the user and the system, and the user needs to take over a dynamic driving task. The levels L4 and L5 enable the user to have a complete role change to a passenger. Currently, functions that can be implemented by the ADAS mainly include but are not limited to adaptive cruise, automatic emergency braking, auto parking, blind spot monitoring, traffic warning/braking at front crossroads, traffic warning/braking at rear crossroads, preceding vehicle collision warning, lane departure warning, lane keeping assistance, trailing vehicle anti-collision warning, traffic sign recognition, traffic jam assistance, highway assistance, and the like. It should be understood that the functions may have specific modes at different autonomous driving levels (L0 to L5). A higher autonomous driving level indicates a more intelligent corresponding mode, and requires higher precision of a sensing algorithm and higher precision of a planning and control algorithm. For example, the auto parking may include APA, RPA, AVP, and the like. For the APA, a driver does not need to control a steering wheel, but still needs to control a throttle and a brake on a vehicle. For the RPA, the driver may remotely park the vehicle outside the vehicle by using a terminal (for example, a mobile phone). For the AVP, the vehicle may complete parking without the driver. From a perspective of a corresponding autonomous driving level, the APA is approximately at the level L1, the RPA is approximately at the level L2 or L3, and the AVP is approximately at the level L4.

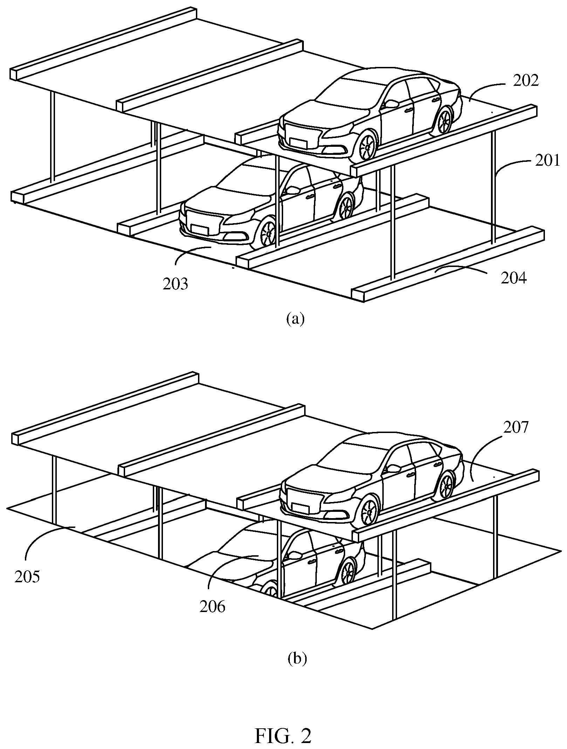

A mechanical parking space is a non-fixed parking space, and can move up and down, so that the vehicle is parked based on a specific parking logic. The mechanical parking space needs to implement using of a personal parking space by relying on overall operation of a transmission mechanism and space switching. As shown in (a) in FIG. 2, the mechanical parking space may move up and down via a transmission mechanism 201. The mechanical parking space may include a mechanical parking space that is disposed on the ground and that is shown in (a) in FIG. 2. The mechanical parking space may include a high parking space, for example, a parking space 202, and a ground parking space, for example, a parking space 203. The machinery may further include a sunken mechanical parking space shown in (b) in FIG. 2, where 205 is a ground plane, and the mechanical parking space may include a sunken parking space (or referred to as a low parking space), for example, a parking space 206, and a high parking space, for example, a parking space 207. In some cases, the sunken mechanical parking space may also include a ground parking space. As described above, after the vehicle is parked in the mechanical parking space and the mechanical parking space rises to a high position, for example, when the vehicle is parked in the parking space 202 shown in (a) in FIG. 2, if the user mistakenly enables a remote parking function, the vehicle may fall from the high position. Alternatively, after the vehicle is parked in the mechanical parking space and the mechanical parking space falls to a low position, for example, when the vehicle is parked in the parking space 206 shown in (b) in FIG. 2, if the user mistakenly enables a remote parking function, the vehicle may collide with a wall around the parking space.

In view of this, embodiments of this application provide a parking method and apparatus, and an intelligent driving device, to recognize whether a vehicle is located in a mechanical parking space and whether the mechanical parking space is at a high position, exit a remote parking procedure when the mechanical parking space is at the high position, and notify a user. In this way, safety of the vehicle and the user is ensured.

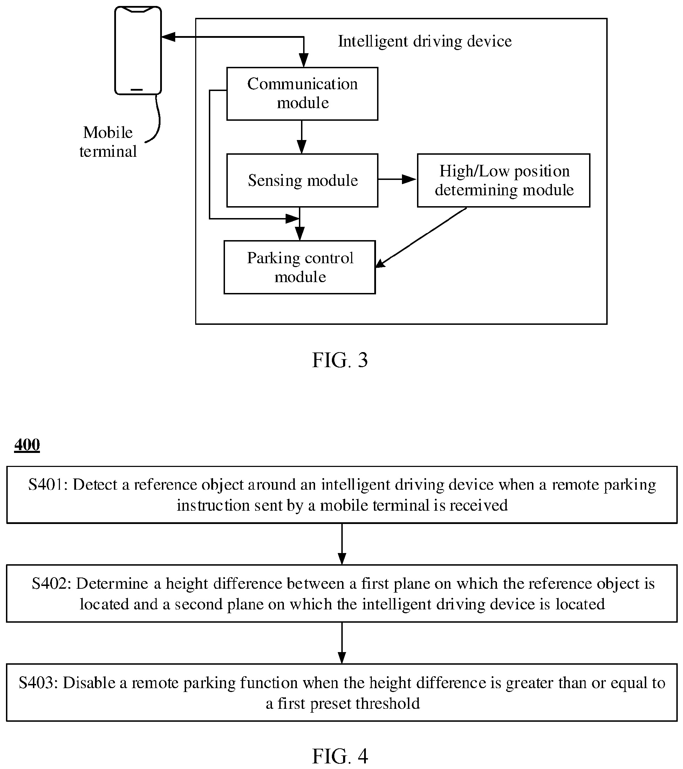

FIG. 3 is a diagram of a system architecture required for implementing a parking method according to an embodiment of this application. The system 300 includes an intelligent driving device and a mobile terminal. The intelligent driving device includes a communication module, a sensing module, a high/low position determining module, and a parking control module. The communication module may include the communication system 130 shown in FIG. 1, and is configured to receive a remote parking instruction from the mobile terminal. The sensing module may include one or more camera apparatuses or one or more radar sensors in the sensing system 120 shown in FIG. 1, and is configured to collect information around the intelligent driving device, for example, position information of a pedestrian around the intelligent driving device and information about a specific reference object. The high/low position determining module and the parking control module may be one or more processors in the computing platform 150 shown in FIG. 1. The high/low position determining module is configured to determine, based on the information around the intelligent driving device, whether the intelligent driving device is at a high position or a low position, for example: determine, based on a relative height between the pedestrian and the intelligent driving device, a relative height between the specific reference object and the intelligent driving device, and the like, whether the intelligent driving device is at the high position or the low position. When the intelligent driving device is at the high position or the low position, the high/low position determining module indicates the parking control module to exit a remote parking function, and sends a remote parking exit notification to the mobile terminal by using the communication module. When the intelligent driving device is not at the high position, the parking control module controls, based on a remote parking instruction from the mobile terminal, the intelligent driving device to park.

It should be understood that the foregoing modules are merely examples. In actual application, the foregoing modules may be added or deleted based on an actual requirement. For example, in the system architecture shown in FIG. 3, the sensing module and the high/low position determining module may be combined into one module.

FIG. 4 is a schematic flowchart of a parking method according to an embodiment of this application. The method 400 may be applied to the intelligent driving device shown in FIG. 1, or the method may be performed by the system shown in FIG. 3. For example, the following uses an example in which the method is performed by a computing platform of an intelligent driving device for description. The method 400 may include the following steps.

S401: Detect a reference object within a preset range of the intelligent driving device when a remote parking instruction sent by a mobile terminal is received.

For example, the mobile terminal and the intelligent driving device may respectively be the mobile terminal and the intelligent driving device shown in FIG. 3. Alternatively, the intelligent driving device may be the intelligent driving device 100 shown in FIG. 1, and the mobile terminal may be a mobile terminal configured to control the intelligent driving device 100.

For example, the mobile terminal may include various handheld devices (such as a mobile phone and a remote key) that are associated with the intelligent driving device and that have a wireless communication function, a wearable device, a computing device or another processing device connected to a wireless modem, and various forms of terminals, mobile stations, user equipment, and the like.

For example, the preset range may be a range that is 3 meters away from an outer contour of the intelligent driving device, or may be another range.

For example, the reference object may include a pedestrian around the intelligent driving device. The pedestrian around the intelligent driving device may include a user of the intelligent driving device. For example, the user of the intelligent driving device may include a user whose identity information is registered with the intelligent driving device. The identity information includes but is not limited to biometric feature information such as face information, height information, and gait information.

In some possible implementations, the reference object may further include a specific reference object, and the specific reference object may alternatively be an object at a fixed height, or an object whose height is specified in a related standard.

S402: Determine a height difference between a first plane on which the reference object is located and a second plane on which the intelligent driving device is located.

For example, the first plane may be lower than the second plane. For example, the intelligent driving device is located in a high parking space (for example, the parking space 202 or 207). Alternatively, the first plane may be higher than the second plane. For example, the intelligent driving device is located in a sunken parking space (for example, the parking space 206).

In some possible implementations, before the determining a height difference between a first plane on which the reference object is located and a second plane on which the intelligent driving device is located, the method further includes: controlling the mobile terminal to notify the user of the intelligent driving device to enter the preset range.

For example, the mobile terminal is controlled to notify the user of the intelligent driving device to enter a preset area of the intelligent driving device, and the preset range includes the preset area.

For example, when the user is not detected in the preset area within preset duration, it is determined that the height difference between the first plane on which the user is located and the second plane is greater than or equal to a first preset threshold.

It should be noted that some intelligent driving devices do not have a capability of detecting a negative obstacle. In this case, when the intelligent driving device is at a high position, and a highest position of a reference object on the ground is lower than a plane on which the intelligent driving device is located, the intelligent driving device cannot detect the reference object. Alternatively, the intelligent driving device is located in the sunken parking space, and a sensor of the intelligent driving device may be blocked by an obstacle like a wall around the sunken parking space. As a result, a reference object on the ground cannot be recognized. Therefore, when the reference object is not detected within the preset duration, it may be considered that the intelligent driving device is at the high position or in the sunken parking space, and is not suitable for remote parking, and a remote parking function is disabled.

For example, the preset duration may start from controlling the mobile terminal to notify the user of the intelligent driving device to enter the preset area of the intelligent driving device. The preset duration may be 10 seconds, or may be 5 seconds, or may be other duration.

For example, the controlling the mobile terminal to notify the user of the intelligent driving device to enter the preset area of the intelligent driving device may include: sending a related instruction to the mobile terminal, so that the mobile terminal notifies the user to enter the preset area of the intelligent driving device.

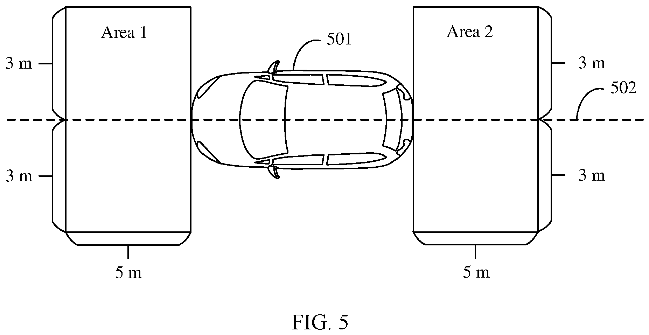

For example, the preset area may be a sensing area of a sensor of the intelligent driving device. Alternatively, the preset area may be a fixed area of the head and/or the tail of the intelligent driving device. For example, as shown in FIG. 5, the intelligent driving device is a vehicle 501. The preset area may include an area 1 and/or an area 2. **In** some possible implementations, the area 1 (and/or the area 2) is symmetrical with respect to a longitudinal symmetry plane 502 of the vehicle 501. It should be understood that sizes of the area 1 and the area 2 shown in FIG. 5 are merely examples for description. **In** a specific implementation process, a size of the preset area may vary with the intelligent driving device.

S403: Disable the remote parking function when the height difference is greater than or equal to the first preset threshold.

For example, the first preset threshold may be 20 centimeters, 30 centimeters, or another value.

In some possible implementations, it is determined, based on a relationship between a height of the reference object and a preset height threshold, that the height difference between the first plane and the second plane is greater than or equal to the first preset threshold. For example, when the height of the reference object is less than or equal to the preset height threshold, it is determined that the first plane on which the reference object is located is lower than the second plane on which the intelligent driving device is located, and that the height difference between the first plane and the second plane is greater than or equal to the first preset threshold.

In some possible implementations, if the reference object is the user of the intelligent driving device, and the intelligent driving device stores height information of the user, the preset height threshold may be a height of the user, or may be a height obtained by subtracting a corresponding error from a height of the user. The corresponding error may be 5 centimeters, or may be another value.

In some possible implementations, when the intelligent driving device stores height information of a plurality of users, the intelligent driving device may first determine an identity of the user, and then determine the height information of the user. For example, the identity of the user may be determined based on the face information, the gait information, or the like of the user.

In some possible implementations, if the reference object is a pedestrian, determining that the height difference between the first plane on which the reference object is located and the second plane on which the intelligent driving device is located is greater than or equal to the first preset threshold includes: determining, based on a human body feature of the pedestrian, that the height difference between the first plane on which the reference object is located and the second plane is greater than or equal to the first preset threshold. The human body feature may include a location of a human body key point (for example, a human joint) in three-dimensional space. Alternatively, the human body feature may further include an age and the like.

In some possible implementations, before the reference object around the intelligent driving device is detected, it is determined that the intelligent driving device is located in a mechanical parking space.

In some possible implementations, after the remote parking function is disabled, the mobile terminal is controlled to notify the user of the intelligent driving device that the remote parking function is disabled. For example, the mobile terminal is controlled to display "Currently, the vehicle is at a high position. Please lower the vehicle to the ground and then perform remote parking".

For example, controlling the mobile terminal to notify the user that the remote parking function of the intelligent driving device is disabled may include: sending a related instruction to the mobile terminal, so that the mobile terminal notifies the user that the remote parking function is disabled.

In some possible implementations, when the height difference between the first plane and the second plane is less than a second preset threshold, the intelligent driving device is controlled, based on the remote parking instruction, to park, where the second preset threshold is less than or equal to the first preset threshold.

For example, the second preset threshold may be 10 centimeters, 20 centimeters, or another value.

In some possible implementations, when the height difference between the first plane and the second plane is less than the second preset threshold, the mobile terminal is controlled to notify the user of the intelligent driving device that remote parking is ready and remote parking can be performed.

According to the parking method provided in this embodiment of this application, when the intelligent driving device is located at the high position, for example, at a second layer of the mechanical parking space, and the user enables the remote parking function, the remote parking function may be disabled, to prevent the intelligent driving device from falling from the high position. This helps improve safety of the intelligent driving device and personal safety of the pedestrian around the intelligent driving device. When the intelligent driving device is at a low position, for example, in a sunken parking space, and the user enables the remote parking function, the remote parking function may be disabled, to prevent the intelligent driving device from colliding with a wall around the sunken parking space. This helps improve safety of the intelligent driving device.

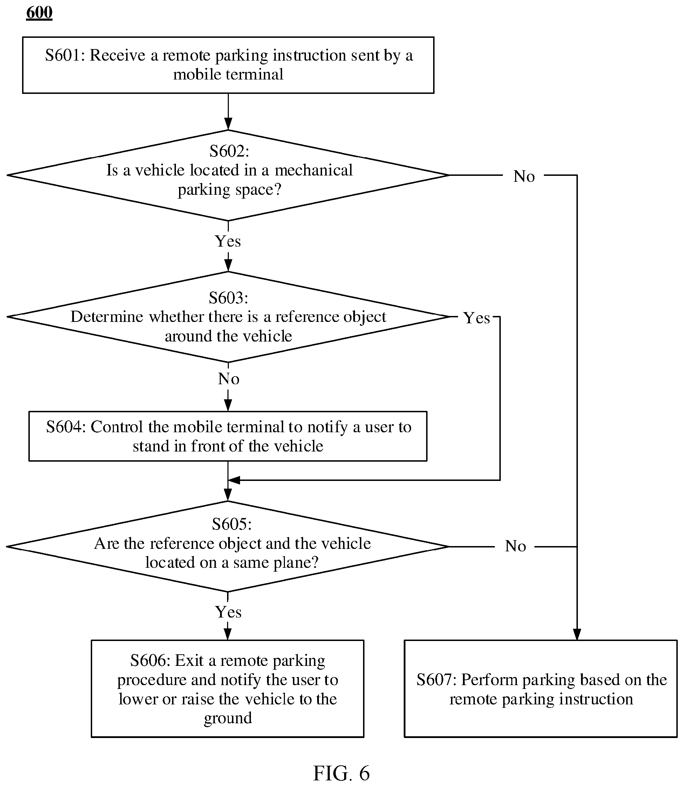

FIG. 6 is another schematic flowchart of a parking method according to an embodiment of this application. The method 600 may be applied to the intelligent driving device shown in FIG. 1, or the method may be performed by the system shown in FIG. 3. The method 600 may be understood as an extension of the method 400. The method 600 may be performed in parallel with the method 400, or may be performed after the method 400. For example, the following uses an example in which the method is performed by a computing platform of an intelligent driving device for description. The method 600 may include the following steps.

S601: Receive a remote parking instruction sent by a mobile terminal.

For example, the mobile terminal may be the mobile terminal in the foregoing embodiment.

S602: Determine whether a vehicle is located in a mechanical parking space.

For example, the vehicle may be an example of the intelligent driving device in the foregoing embodiment.

Specifically, if the vehicle is located in the mechanical parking space, S603 is performed. Otherwise, S607 is performed.

For example, in a process in which the vehicle travels to the mechanical parking space, the vehicle collects an image of the mechanical parking space. In this case, it may be detected, based on a deep learning target detection model, whether there is a convex edge (as shown in 204 in FIG. 2) at a boundary of the mechanical parking space in the parking space image collected by the vehicle. If the convex edge is detected, it is determined that the vehicle is currently in the mechanical parking space. Otherwise, the vehicle is not in the mechanical parking space.

S603: Determine whether there is a reference object around the vehicle.

For example, the reference object may be the reference object in the foregoing embodiment.

Specifically, if it is detected that there is a reference object around the vehicle, S605 is performed. Otherwise, S604 is performed.

S604: Control the mobile terminal to notify the user to stand in front of the vehicle.

For example, the front of the vehicle may be an example of the preset area in the method 400.

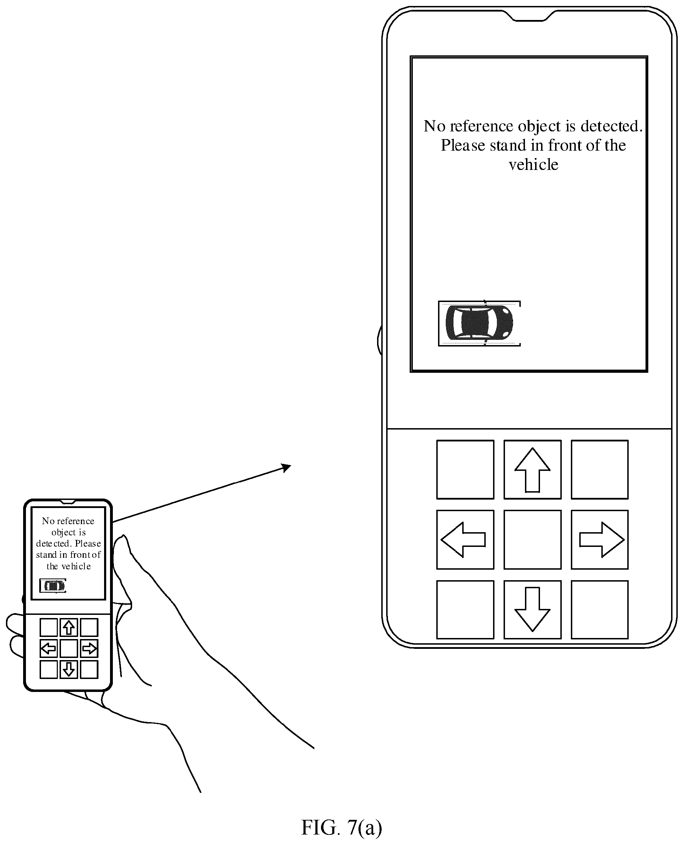

For example, as shown in FIG. 7(a), the mobile terminal provides a notification "No reference object is detected. Please stand in front of the vehicle."

S605: Determine whether the reference object and the vehicle are on a same plane.

For example, when a height difference between a plane on which the reference object is located and a plane on which the vehicle is located is greater than or equal to a first preset threshold, it is determined that the reference object and the vehicle are not located on a same plane. When a height difference between a plane on which the reference object is located and a plane on which the vehicle is located is less than a second preset threshold, it is determined that the reference object and the vehicle are on a same plane. The first preset threshold may be the first preset threshold in the method 400, and the second preset threshold may be the second preset threshold in the method 400, or the first preset threshold and the second preset threshold may be other values.

Specifically, when the reference object and the vehicle are not on a same plane, S606 is performed. Otherwise, S607 is performed.

In some possible implementations, if a height of the reference object is less than or equal to a preset height threshold, it is determined that the plane on which the reference object is located is lower than the plane on which the vehicle is located, and the height difference between the plane on which the reference object is located and the plane on which the vehicle is located is greater than or equal to the first preset threshold.

For example, when the reference object is the specific reference object in the foregoing embodiment, a height of the specific reference object may be determined by using an image recognition algorithm, to determine whether the height of the specific reference object is less than or equal to the preset height threshold.

For example, the reference object may be the user in S604.

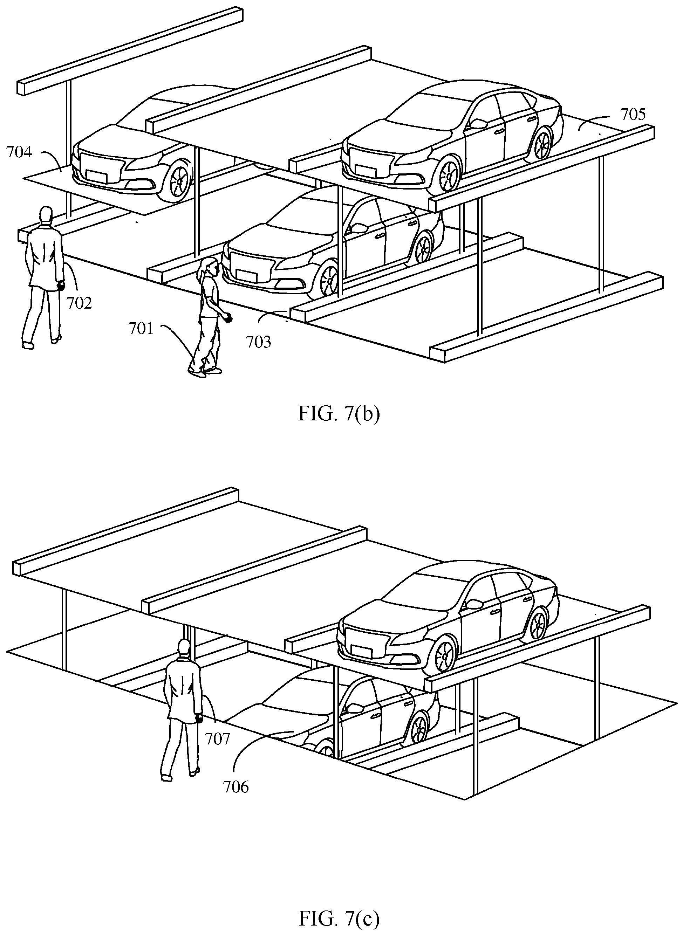

In some possible implementations, when the vehicle does not support detection of a negative obstacle, or accuracy of detecting a negative obstacle is low, if a position of the vehicle is excessively high, after the mobile terminal notifies the user to stand in front of the vehicle, the user may still not be detected. As shown in FIG. 7(b), for example, the reference object includes a pedestrian 701 and a pedestrian 702. If the vehicle is located in a parking space 703 or a parking space 704, the vehicle may detect the reference object. If the vehicle is located in a parking space 705, the vehicle cannot detect the reference object because the position of the vehicle is excessively high.

Alternatively, the vehicle is located in a sunken parking space, and a sensor of the vehicle is blocked by an obstacle like a wall around the sunken parking space. As a result, a user on a ground may not be recognized. As shown in FIG. 7(c), for example, the reference object includes a pedestrian 707. If the vehicle is located in a parking space 706, the vehicle cannot detect the reference object because the position of the vehicle is excessively low.

**In** the foregoing two scenarios, it may be determined that the difference between a plane on which the user is located and the plane on which the vehicle is located is greater than or equal to the first preset threshold. **In** this case, S606 is performed.

For example, when the reference object is a pedestrian, a position relationship between a plane on which the pedestrian is located and the plane on which the vehicle is located and a height difference between the two planes may be determined based on a human body feature of the pedestrian.

For example, the human body feature includes a position that is of a human body key point (for example, a human joint) in three-dimensional space and that is estimated based on a human body image through three-dimensional human pose estimation (3D human pose estimation, 3D HPE). For example, the human body feature of the pedestrian may be determined by using a monocular human body image, or the human body feature of the pedestrian may be determined by using a multi-ocular human body image, or the human body feature of the pedestrian may be determined based on consecutive frames of a video.

In some possible implementations, images of two or more angles of view are simultaneously input into an automatic encoder model, and only two-dimensional feature point information is used as supervision. 2D pose inputting is performed for one of the angles of view, and a three-dimensional pose output of the other angle of view is predicted based on a conversion relationship between the two angles of view, to determine human pose information of the pedestrian. Alternatively, the human body feature of the pedestrian may be determined by using a triangulation (triangulation) method in stereoscopic vision, to be specific, a position of a human body key point in three-dimensional space is calculated based on known positions of a plurality of cameras and a projection point of a point in space.

For example, whether the plane on which the pedestrian is located is lower than the plane on which the vehicle is located and the height difference between the two planes are determined based on a relative position of the human body key point relative to the plane on which the vehicle is located. The following uses an example in which the vehicle is a vehicle 711 and the reference object is a pedestrian 713 to describe how to determine a height relationship between the two planes when the vehicle and the pedestrian are at different relative positions.

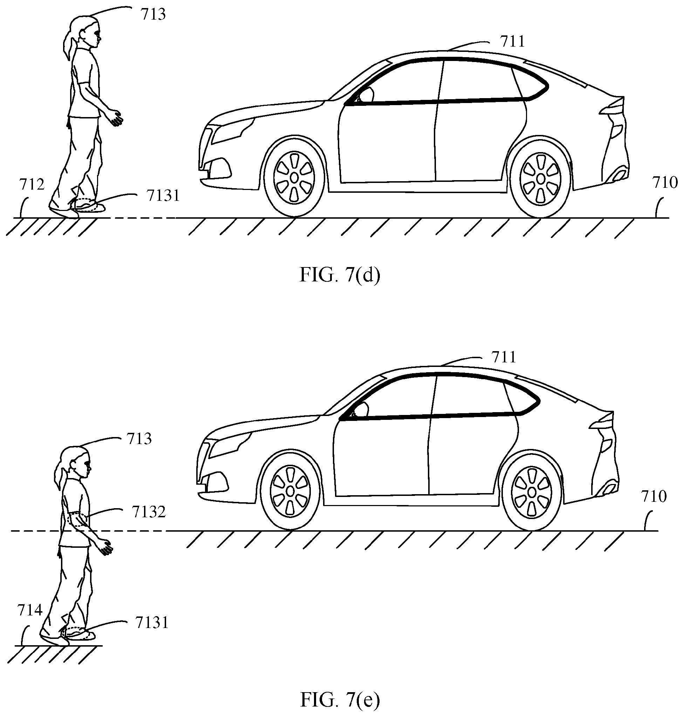

FIG. 7(d) shows a relative location relationship between a vehicle and a pedestrian in a case in which the vehicle 711 is located in the parking space 703. Specifically, the vehicle 711 is located on a plane 710, the pedestrian 713 is located on a plane 712, and the plane 710 and the plane 712 are located on a same plane. In the foregoing scenario, the vehicle 711 may recognize that a plane on which an ankle 7131 (an example of the human body key point) of the pedestrian 713 is located and the plane on which the vehicle 711 is located are a same plane. Further, it may be determined that the plane on which the pedestrian is located and the plane on which the vehicle is located are a same plane.

FIG. 7(e) shows a relative location relationship between a vehicle and a pedestrian in a case in which the vehicle 711 is located in the parking space 704. Specifically, the vehicle 711 is located on a plane 710, the pedestrian 713 is located on a plane 714, and the plane 714 is lower than the plane 710. **In** the foregoing scenario, the vehicle 711 cannot recognize an ankle 7131 of the pedestrian 713, but can recognize that a plane on which an elbow 7312 (another example of the human body key point) of the pedestrian 713 is located and the plane on which the vehicle 711 is located are a same plane. Further, it may be determined that the plane on which the pedestrian is located is lower than the plane on which the vehicle is located. Further, a height difference between the plane 710 and the plane 714 may be determined based on a position of the ankle 7131 in the three-dimensional space and a position of the plane 710.

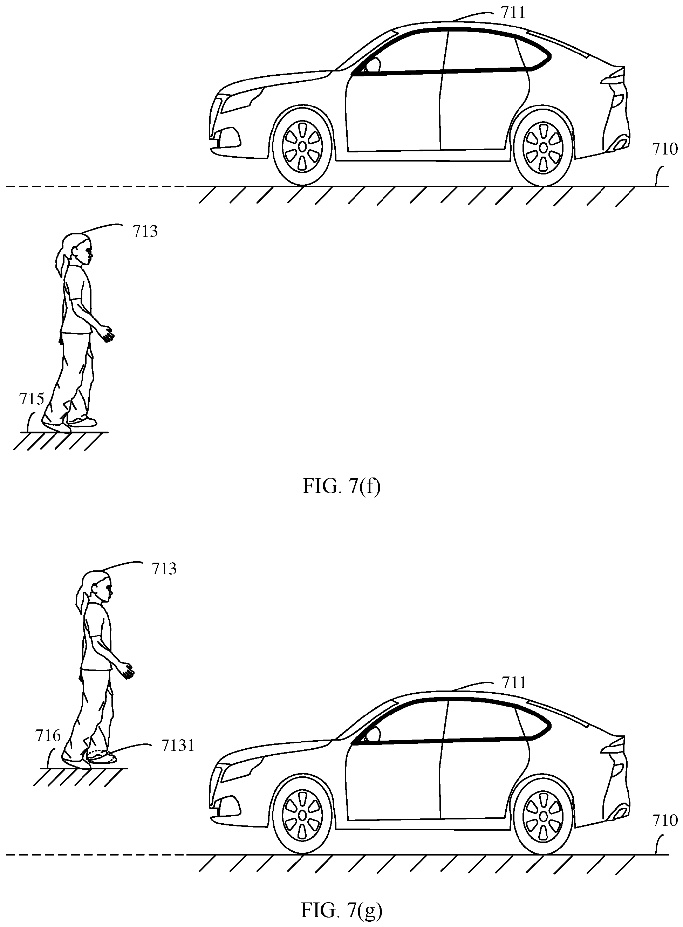

FIG. 7(f) shows a relative location relationship between a vehicle and a pedestrian in a case in which the vehicle 711 is located in the parking space 705. Specifically, the vehicle 711 is located on a plane 710, the pedestrian 713 is located on a plane 715, and the plane 715 is far lower than the plane 710. In the foregoing scenario, the vehicle 711 cannot recognize the pedestrian 713. Further, it may be determined that the height difference between the plane on which the pedestrian is located and the plane on which the vehicle is located is greater than the first preset threshold.

FIG. 7(g) shows a relative location relationship between a vehicle and a pedestrian in a case in which the vehicle 711 is located in the parking space 706. Specifically, the vehicle 711 is located on a plane 710, the pedestrian 713 is located on a plane 716, and the plane 715 is higher than the plane 710. In the foregoing scenario, the vehicle 711 can recognize an ankle 7131 of the pedestrian 713. Further, it may be determined that the plane on which the pedestrian is located is higher than the plane on which the vehicle is located. Further, a height difference between the plane 710 and the plane 716 may be determined based on a position of the ankle in the three-dimensional space and a position of the plane 710.

It should be understood that the plane 712, the plane 714, the plane 715, and the plane 716 are some examples of the first plane in the method 400, and the plane 710 is an example of the second plane in the method 400.

In addition, descriptions with reference to the scenario shown in FIG. 7(a) to FIG. 7(i) are merely examples for description. In a specific implementation process, the mechanical parking space may include more layers of parking spaces, for example, three or six layers, and the vehicle may be parked in a parking space at a higher layer or a lower layer. The method in this application may be applied to the foregoing scenario.

S606: Exit a remote parking procedure and notify the user to lower or raise the vehicle to the ground.

In some possible implementations, when the vehicle exits the remote parking procedure, a related instruction is sent to the mobile terminal, so that the mobile terminal notifies the user that remote parking is exited.

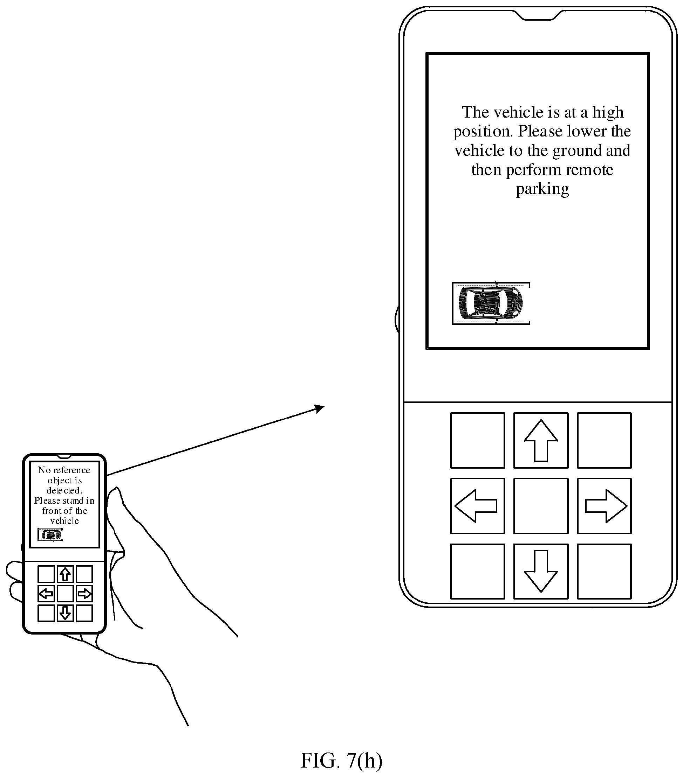

For example, as shown in FIG. 7(h), the vehicle may control the mobile terminal to display "Currently, the vehicle is at a high position. Please lower the vehicle to the ground and then perform remote parking", to notify the user that remote parking is exited.

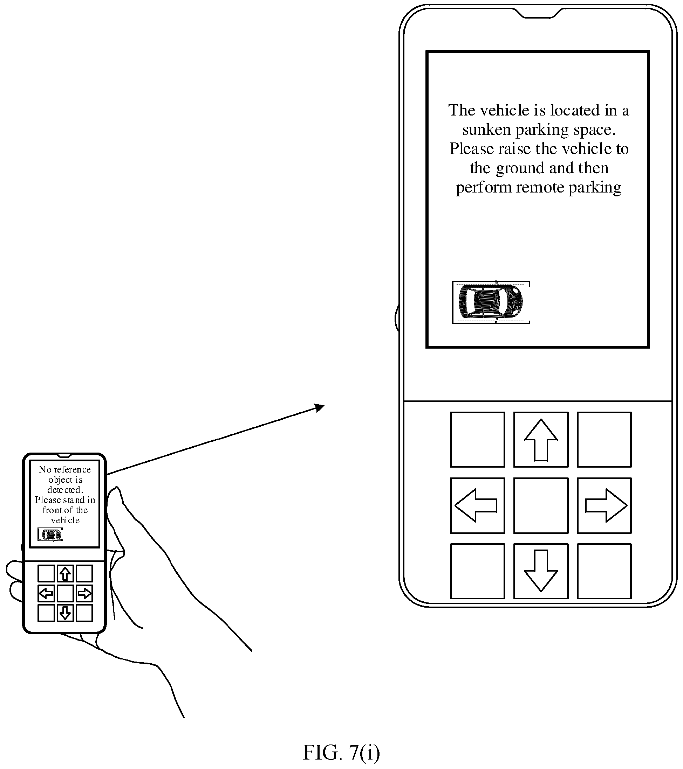

For another example, as shown in FIG. 7(i), the vehicle may control the mobile terminal to display "Currently, the vehicle is located in a sunken parking space. Please raise the vehicle to the ground and then perform remote parking", to notify the user that remote parking is exited.

S607: Perform parking based on the remote parking instruction.

Generally, RPA supports parking in and out of the mechanical parking space. When the vehicle is parked in the mechanical parking space, the user may not confirm whether the vehicle is located in a high-layer space or sunken parking space before using an RPA function. As a result, the vehicle crashes or collides. According to the parking method provided in this embodiment of this application, when the vehicle is parked in the mechanical parking space, even if the user enables the RPA function, the vehicle may control, based on information indicating that the vehicle is at the high position, to terminate the remote parking procedure, to prevent the vehicle from falling from the high position. Alternatively, the vehicle may control, based on information indicating that the vehicle is located in the sunken parking space, to terminate the remote parking procedure, to prevent the vehicle from colliding with the wall around the sunken parking space.

In embodiments of this application, unless otherwise stated or there is a logic conflict, terms and/or descriptions between the embodiments are consistent and may be mutually referenced, and technical features in different embodiments may be combined into a new embodiment based on an internal logical relationship thereof.

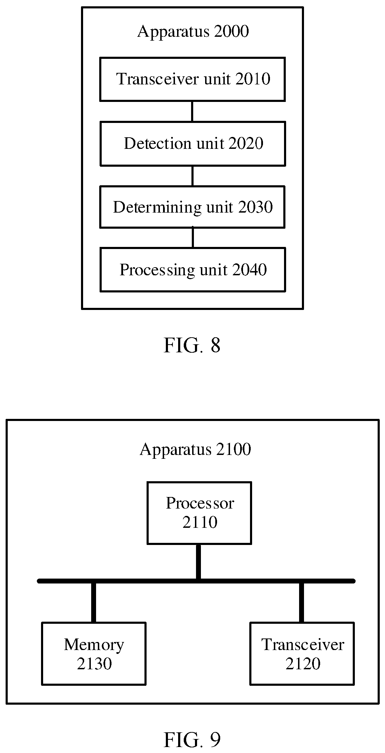

The methods provided in embodiments of this application are described above in detail with reference to FIG. 1 to FIG. 7(i). The following describes in detail apparatuses provided in embodiments of this application with reference to FIG. 8 and FIG. 9. It should be understood that descriptions of apparatus embodiments correspond to descriptions of method embodiment. Therefore, for content that is not described in detail, refer to the method embodiment. For brevity, details are not described herein again.

FIG. 8 is a block diagram of a parking apparatus 2000 according to an embodiment of this application. The apparatus 2000 includes a transceiver unit 2010, a detection unit 2020, a determining unit 2030, and a processing unit 2040.

The apparatus 2000 may include units configured to perform the methods in FIG. 4 and FIG. 6. In addition, the units in the apparatus 2000 are respectively configured to implement corresponding procedures of the method embodiments in FIG. 4 and FIG. 6.

When the apparatus 2000 is configured to perform the method 400 in FIG. 4, the transceiver unit 2010 and the detection unit 2020 may be configured to perform S401 in the method 400, the determining unit 2030 may be configured to perform S402 in the method 400, and the processing unit 2040 may be configured to perform S403 in the method 400.

Specifically, the detection unit 2020 is configured to detect a reference object within a preset range of an intelligent driving device when the transceiver unit 2010 receives a remote parking instruction sent by a mobile terminal. The determining unit 2030 is configured to determine a height difference between a first plane on which the reference object is located and a second plane on which the intelligent driving device is located. The processing unit 2040 is configured to disable a remote parking function when the height difference is greater than or equal to a first preset threshold.

In some possible implementations, the reference object includes a user of the intelligent driving device. The processing unit 2040 is further configured to: before the determining unit 2030 determines the height difference between the first plane on which the reference object is located and the second plane on which the intelligent driving device is located, control the mobile terminal to notify the user to enter the preset range.

In some possible implementations, the preset range includes a preset area of a vehicle head of the intelligent driving device, and the processing unit 2040 is configured to control the mobile terminal to notify the user to enter the preset area of the vehicle head.

In some possible implementations, the determining unit 2030 is configured to: when the user is not detected within the preset range within preset duration starting from controlling the mobile terminal to notify the user to enter the preset range, determine that the height difference is greater than or equal to the first preset threshold.

In some possible implementations, the reference object includes a pedestrian around the intelligent driving device, and the determining unit 2030 is configured to determine, based on a human body feature of the pedestrian, the height difference between the first plane on which the pedestrian is located and the second plane.

In some possible implementations, the processing unit 2040 is further configured to: before the detection unit 2020 detects the reference object around the intelligent driving device, determine that the intelligent driving device is located in a mechanical parking space.

In some possible implementations, the processing unit 2040 is further configured to control the mobile terminal to notify the user of the intelligent driving device that the remote parking function is disabled.

In some possible implementations, the processing unit 2040 is further configured to: when the height difference is less than a second preset threshold, control, based on the remote parking instruction, the intelligent driving device to park, where the second preset threshold is less than or equal to the first preset threshold.

In some possible implementations, the processing unit 2040 is configured to disable the remote parking function when the height difference is greater than or equal to the first preset threshold and the first plane is lower than the second plane.

For example, the transceiver unit 2010, the detection unit 2020, the determining unit 2030, and the processing unit 2040 may be disposed in the intelligent driving device 100 shown in FIG. 1. More specifically, the transceiver unit 2010, the detection unit 2020, the determining unit 2030, and the processing unit 2040 may be disposed in the computing platform 150 shown in FIG. 1. For example, the transceiver unit 2010, the detection unit 2020, the determining unit 2030, and the processing unit 2040 may be further disposed in the system shown in FIG. 3. For example, the transceiver unit 2010 may include the communication module shown in FIG. 3, and the detection unit 2020 may include the sensing module shown in FIG. 3. The determining unit 2030 may include the high/low position determining module shown in FIG. 3, and the processing unit 2040 may include the parking control module shown in FIG. 3.

It should be understood that unit division of the foregoing apparatus is merely logical function division. During actual implementation, all or some of the units may be integrated into one physical entity, or may be physically separated. **In** addition, the units in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or implement functions of the units in the apparatus. The processor is, for example, a general-purpose processor, for example, a CPU or a microprocessor, and the memory is a memory in the apparatus or a memory outside the apparatus. Alternatively, the units in the apparatus may be implemented in a form of a hardware circuit, and functions of some or all of the units may be implemented by designing the hardware circuit. The hardware circuit may be understood as one or more processors. For example, in an implementation, the hardware circuit is an ASIC, and functions of some or all of the foregoing units are implemented by designing a logical relationship between elements in the circuit. For another example, in another implementation, the hardware circuit may be implemented by using a PLD. An FPGA is used as an example. The hardware circuit may include a large quantity of logic gate circuits, and a connection relationship between the logic gate circuits is configured by using a configuration file, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

Each unit in the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units of the apparatus may be integrated, or may be implemented independently. In an implementation, the units are integrated together and implemented in a form of a system-on-a-chip (system-on-a-chip, SOC). The SOC may include at least one processor, configured to implement any one of the methods or implement functions of the units of the apparatus. Types of the at least one processor may be different, for example, the at least one processor includes a CPU and an FPGA, a CPU and an artificial intelligence processor, or a CPU and a GPU.

In a specific implementation process, operations performed by the transceiver unit 2010, the detection unit 2020, the determining unit 2030, and the processing unit 2040 may be performed by one processor, or may be performed by different processors. In a specific implementation process, the one or more processors may be processors disposed in the computing platform 150 shown in FIG. 1, or the apparatus 2000 may be a chip disposed in the intelligent driving device 100.

FIG. 9 is a block diagram of a parking apparatus according to an embodiment of this application. A parking apparatus 2100 shown in FIG. 9 may include a processor 2110, a transceiver 2120, and a memory 2130. The processor 2110, the transceiver 2120, and the memory 2130 are connected by using an internal connection path. The memory 2130 is configured to store instructions. The processor 2110 is configured to execute the instructions stored in the memory 2130, to implement the parking methods in the foregoing embodiments. Optionally, the memory 2130 may be coupled to the processor 2110 by using an interface, or may be integrated with the processor 2110.

The transceiver 2120 may include but is not limited to, a transceiver apparatus like an input/output interface (input/output interface), to implement communication between the apparatus 2100 and another device or a communication network.

The memory 2130 may be a read only memory (read only memory, ROM), a static storage device, a dynamic storage device, or a random access memory (random access memory, RAM).

The transceiver 2120 uses, for example, but is not limited to, a transceiver apparatus of a transceiver type, to implement communication between the apparatus 2100 and another device or a communication network, to receive/send data/information used to implement the parking methods in the foregoing embodiments.

In a specific implementation process, the apparatus 2100 may be disposed in the computing platform 150 shown in FIG. 1, or may be disposed in the intelligent driving device shown in FIG. 2.

An embodiment of this application further provides an intelligent driving device. The intelligent driving device includes the foregoing apparatus 2000 or the foregoing apparatus 2100.

In some possible implementations, the intelligent driving device may be a vehicle.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

In an implementation process, steps in the foregoing methods can be implemented by using a hardware integrated logical circuit in the processor, or by using instructions in a form of software. The method of the communication disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. **In** addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A parking method, comprising:
detecting a reference object within a preset range of an intelligent driving device when a remote parking instruction sent by a mobile terminal is received;
determining a height difference between a first plane on which the reference object is located and a second plane on which the intelligent driving device is located; and
disabling a remote parking function when the height difference is greater than or equal to a first preset threshold.

2. The method according to claim 1, wherein the reference object comprises a user of the intelligent driving device, and before the determining a height difference between a first plane on which the reference object is located and a second plane on which the intelligent driving device is located, the method further comprises:
controlling the mobile terminal to notify the user to enter the preset range.

3. The method according to claim 2, wherein the preset range comprises a preset area of a vehicle head of the intelligent driving device, and the controlling the mobile terminal to notify the user to enter the preset range comprises:
controlling the mobile terminal to notify the user to enter the preset area of the vehicle head.

4. The method according to claim 2 or 3, wherein the method further comprises:
when the user is not detected within the preset range within preset duration starting from controlling the mobile terminal to notify the user to enter the preset range, determining that the height difference is greater than or equal to the first preset threshold.

5. The method according to any one of claims 1 to 4, wherein the reference object comprises a pedestrian around the intelligent driving device, and the determining a height difference between a first plane on which the reference object is located and a second plane on which the intelligent driving device is located comprises:
determining, based on a human body feature of the pedestrian, the height difference between the first plane on which the pedestrian is located and the second plane.

6. The method according to any one of claims 1 to 5, wherein before the detecting a reference object around an intelligent driving device, the method further comprises:
determining that the intelligent driving device is located in a mechanical parking space.

7. The method according to any one of claims 1 to 6, wherein the method further comprises:
controlling the mobile terminal to notify the user of the intelligent driving device that the remote parking function is disabled.

8. The method according to any one of claims 1 to 7, wherein the method further comprises:
when the height difference is less than a second preset threshold, controlling the intelligent driving device to park based on the remote parking instruction, wherein the second preset threshold is less than or equal to the first preset threshold.

9. The method according to any one of claims 1 to 8, wherein the disabling a remote parking function when the height difference is greater than or equal to a first preset threshold comprises:
disabling the remote parking function when the height difference is greater than or equal to the first preset threshold and the first plane is lower than the second plane.

10. A parking apparatus, comprising a transceiver unit, a detection unit, a determining unit, and a processing unit, wherein
the detection unit is configured to: detect a reference object within a preset range of an intelligent driving device when the transceiver unit receives a remote parking instruction sent by a mobile terminal;
the determining unit is configured to: determine a height difference between a first plane on which the reference object is located and a second plane on which the intelligent driving device is located; and
the processing unit is configured to disable a remote parking function when the height difference is greater than or equal to a first preset threshold.

11. The apparatus according to claim 10, wherein the reference object comprises a user of the intelligent driving device, and the processing unit is further configured to:
before the determining unit determines the height difference between the first plane on which the reference object is located and the second plane on which the intelligent driving device is located, control the mobile terminal to notify the user to enter the preset range.

12. The apparatus according to claim 11, wherein the preset range comprises a preset area of a vehicle head of the intelligent driving device, and the processing unit is configured to:
control the mobile terminal to notify the user to enter the preset area of the vehicle head.

13. The apparatus according to claim 11 or 12, wherein the determining unit is configured to:
when the user is not detected within the preset range within preset duration starting from controlling the mobile terminal to notify the user to enter the preset range, determine that the height difference is greater than or equal to the first preset threshold.

14. The apparatus according to any one of claims 10 to 13, wherein the reference object comprises a pedestrian around the intelligent driving device, and the determining unit is configured to:
determine, based on a human body feature of the pedestrian, the height difference between the first plane on which the pedestrian is located and the second plane.

15. The apparatus according to any one of claims 10 to 14, wherein the processing unit is further configured to:
before the detection unit detects the reference object around the intelligent driving device, determine that the intelligent driving device is located in a mechanical parking space.

16. The apparatus according to any one of claims 10 to 15, wherein the processing unit is further configured to:
control the mobile terminal to notify the user of the intelligent driving device that the remote parking function is disabled.

17. The apparatus according to any one of claims 10 to 16, wherein the processing unit is further configured to:
when the height difference is less than a second preset threshold, control the intelligent driving device to park based on the remote parking instruction, wherein the second preset threshold is less than or equal to the first preset threshold.

18. The apparatus according to any one of claims 10 to 17, wherein the processing unit is configured to:
disable the remote parking function when the height difference is greater than or equal to the first preset threshold and the first plane is lower than the second plane.

19. A parking apparatus, comprising:
a memory, configured to store a computer program; and
a processor, configured to execute the computer program stored in the memory, to enable the apparatus to perform the method according to any one of claims 1 to 9.

20. An intelligent driving device, comprising the apparatus according to any one of claims 10 to 19.

21. A computer-readable storage medium, wherein the computer-readable storage medium stores instructions, and when the instructions are executed by a processor, the processor is enabled to implement the method according to any one of claims 1 to 9.

22. A chip, wherein the chip comprises a circuit, and the circuit is configured to perform the method according to any one of claims 1 to 9.
